# EUROPEAN PATENT APPLICATION

(11) **EP 4 664 372 A1**
(43) Date of publication of application: **17.12.2025**
(21) Application number: 24181120.7
(22) Date of filing: 10.06.2024
(51) Int. Cl.: G06Q 10/20

(54) **COMPUTER-IMPLEMENTED METHOD FOR OPTIMIZING A RETROFIT INSTRUCTION FOR RETROFITTING A TECHNICAL SYSTEM OR AT LEAST ONE TECHNICAL COMPONENT OF THE TECHNICAL SYSTEM**

(71) Applicant: Siemens Aktiengesellschaft, 80333 München (DE)
(72) Inventor: Dranov, Alexander, 81249 München (DE); Khalil, Mohamed, 81379 München (DE); Malik, Vincent, 80636 München (DE); Obst, Birgit, 80935 München (DE)
(74) Representative: Siemens Patent Attorneys

(57) **Abstract**

The invention relates to a computer-implemented method for optimizing a retrofit instruction for retrofitting a technical system or at least one technical component of the technical system, comprising the steps a. Providing a plurality of sustainability data items (S1); b. Providing at least one remaining lifetime and at least one performance indicator for at least one sustainability data item of the plurality of sustainability data items (S2); wherein the at least one remaining lifetime and/or the at least one performance indicator is determined using physics-based modeling; c. Optimizing the retrofit instruction with regard to a minimal ecological footprint based on the plurality of sustainability data items, the at least one remaining lifetime and the at least one performance indicator (S3); and d. Providing the optimized retrofit instruction as output (S4).

Further, the invention relates to a corresponding computer program product and technical system.

## Description

Computer-implemented method for optimizing a retrofit instruction for retrofitting a technical system or at least one technical component of the technical system

### 1. Technical field

The present invention relates to a computer-implemented method for optimizing a retrofit instruction for retrofitting a technical system or at least one technical component of the technical system. Further, the invention relates to a corresponding computer program product and technical system.

### 2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used. It has become not only a major part of today's industry, but it also drives the business in many industrial domains.

Considering complex industrial plants, the industrial plants usually comprise distinct parts, modules or units with a multiplicity of individual functions. Exemplary units include sensors and actuators. The units and functions have to be controlled and regulated in an interacting manner. They are often monitored, controlled, and regulated by an automation system. The units can either exchange data directly with one another or communicate via a bus system. The units are connected to the bus system via parallel or, more often, serial interfaces.

The increasing digitalization allows for manufacturing or industrial installation of products in a production line of the industrial plant to be performed by robot units or other autonomous units in an automatic manner and thus efficiently at least in part up to now.

Moreover, the products have to be retrofitted e.g. on a regular basis by means of service intervals. For example, drive trains can be retrofitted. Such activities or services usually aim at the utilization of the full lifetimes of products without running to products' failures. Thereby, most often only the energy savings are considered in the sense that the energy consumption of the product is optimized.

However, according to prior art, sustainability aspects such as sustainability impacts of the retrofit are not sufficiently considered. Thereby, the sustainability is influenced by diverse factors, such as when service work for technical components is performed, whether the work is synchronous or spread, how many service workers will travel to the production site, how spare part transports are organized etc.

It is therefore an objective of the invention to provide a computer-implemented method for optimizing a retrofit instruction for retrofitting a technical system or at least one technical component of the technical system, which leads to a smaller ecological footprint.

### 3. Summary of the invention

This problem is according to one aspect of the invention solved by a computer-implemented method for optimizing a retrofit instruction for retrofitting a technical system or at least one technical component of the technical system, comprising the steps:
a. Providing a plurality of sustainability data items (S1);
b. Providing at least one remaining lifetime and at least one performance indicator for at least one sustainability data item of the plurality of sustainability data items (S2); wherein
   the at least one remaining lifetime and/or the at least one performance indicator is determined using physics-based modeling;
c. Optimizing the retrofit instruction with regard to a minimal ecological footprint based on the plurality of sustainability data items, the at least one remaining lifetime and the at least one performance indicator (S3); and
d. Providing the optimized retrofit instruction as output (S4).

Accordingly, the invention is directed to a computer-implemented method for optimizing a retrofit instruction for retrofitting a technical system or at least one technical component of the technical system. According to which, the technical system or the at least one component of the technical system is retrofitted using the retrofit instruction. The retrofit instruction is optimized and hence improved. Preferably, the technical system is designed as industrial plant or production site for products.

First, the input data is provided, namely the plurality of sustainability data items, the at least one remaining lifetime and the at least one performance indicator for the at least one sustainability data item. Thereby, the sustainability data items refer to technical components, whose compromised performance and/or failure is critical to the overall functional performance and/or the environmental impact of the technical system. Hence, the data item is associated with a corresponding lifetime, preferably each data item is associated with a corresponding lifetime. Thereby, the lifetime is an estimate of useful lifetime of a component. The lifetime can be limited by a threshold for the degradation of the technical system's performance as it undergoes one or more operation scenarios. Moreover, the data item is associated with a corresponding performance indicator. Preferably, each data item is associated with a corresponding performance indicator. Missing information about the actual lifetime of the system can result in unplanned outages with long downtimes for corrective retrofit activities or unnecessary preventive retrofit activities with spare parts replacements of well-performing (sub-)components. The present invention considers the prospective lifetime of the technical system to improve the retrofit instruction, through suggesting retrofit activities to be carried out only at times of necessity. The data items can be related to products and hence comprise information or data related to the products. Hence, in this case, the data can comprise product information and product-specific information, such as an environmental impact category or the like. The performance indicator can be defined as Key Performance Indicator, KPI. The KPI can be utilized for e.g. production, cost and quality.

The input data can be received and/or transmitted via one or more input interfaces of a technical unit, wherein the technical unit can be designed as any computing unit. Accordingly, additionally, or alternatively, the output data in form of the optimized retrofit instruction can be sent via one or more output interfaces. This way, data can be efficiently transmitted between computing units reducing data traffic and allowing for bidirectional data exchange.

The input data can be extended with additional data or information, such as operational conditions, environmental conditions and/or a scenario configuration. Moreover, diverse sustainability impact categories or values, e.g. acidification, freshwater eutrophication, ozone depletion, or particle pollution, and most popular the CO2-equivalent or greenhouse gases representing the ecological footprint can be considered.

The input data is provided or received as input for the optimization step. Hence, the input data is used for optimizing the retrofit instruction for a minimal ecological footprint. Most popular, the ecological footprint is calculated as the CO2 equivalent emission. However, the ecological footprint is not limited to CO2. Hence, other considerations and other sustainability impact categories can enter the ecological footprint. The minimal ecological footprint can be equally referred to as sustainably optimization objective or sustainability aspect.

The advantage of the present invention is that, contrary to prior art, the sustainability aspects are considered in the sense of the minimal ecological footprint. For example, the invention can reduce and minimize CO2e emissions that are caused by retrofit services of products. This ensures advantageously additional CO2e-savings.

A further advantage is that its environmental impact is minimized without impairing its reliability and efficiency.

The invention, in other words, allows to find the best sustainability-aware decisions on retrofit works.

A further advantage is that the invention is not limited to CO2 emissions, but instead diverse footprints and hence sustainability aspects can be flexibly considered.

In prior art, usually the ecological footprint is not considered at all, if at all solely in design phases. The decisions with regard to operation and retrofit strategies do not incorporate environmental impact aspects up to now at runtime and hence operational phase.

In an aspect the plurality of sustainability data items is stored in a volatile storage unit or a non-volatile storage unit. Accordingly, the data items are stored in a storage unit in a reliable manner, hence preventing data loss. The storage unit can be flexibly selected, including e.g. database and cloud.

In a further aspect step a. Providing the plurality of sustainability data items comprises receiving the plurality of sustainability data items from the storage unit by means of an input interface; wherein
the input interface is preferably an application programming interface, API, even more preferably a Representational State Transfer-API.

The LCA (lifecycle environmental impact assessment) modeling of the system's components, including their material retrieval, transportation, production processing steps are accessible as input for the optimization of the retrofit instruction for its environmental footprint.

Accordingly, this allows to provide a LCA evaluation service that can be used by a retrofit optimization service. The same holds for the simulation service providing calculations of components' remaining lifetimes and necessary replacements times for running at forecasted specific operational conditions.

In an aspect the at least one remaining lifetime and/or the at least one performance indicator is determined for each sustainability data item of the plurality of sustainability data items. Accordingly, the data items are associated with corresponding remaining lifetimes and performance indicators. In other words, each data item is assigned to its remaining lifetime and performance indicator. Hence, the lifetime and the performance are combined. This extended input data has proven to be advantageous in view of the quality of the optimization output and hence results, such as reduction of CO2 emissions.

In an aspect the method further comprises retrofitting the technical system or the at least one technical component of the technical system using the optimized retrofit instruction. Accordingly, the optimized retrofit instruction is used for retrofitting the technical system or the at least one technical component of the technical system. The optimization has a significant impact on the retrofit. The retrofit is improved in the sense that the optimization factor, namely the minimal ecological footprint, is considered. The technical system or components thereof are retrofitted depending on the minimal ecological footprint.

The technical system and/or a technical component can be adapted, such as replaced, repaired or handled during the retrofit using the retrofit instruction. Accordingly, an exemplary retrofit instruction comprises the information that e.g. a specific technical component, such as the drive train malfunctions and has to be repaired. The retrofit instruction can be carried out to repair the affected technical component.

Moreover, the technical system can be extended with one or more technical components. One or more technical components can be removed or replaced by other one or more other technical components.

In an aspect the method further comprises
- Outputting the optimized retrofit instruction;
- Storing the optimized retrofit instruction;
- Displaying the optimized retrofit instruction;
- Transmitting the optimized retrofit instruction to a computing unit; and/or
- Evaluating the optimized retrofit instruction.

Accordingly, the input data, data of intermediate method steps and/or resulting output data can be further handled. The output data is in particular the optimized retrofit instruction. This output information can be extended with additional information. One or more actions can be performed. The action can be equally referred to as measure.

These actions can be performed by one or more technical units, such as computing unit or robot unit. The actions can be performed gradually or simultaneously. Actions include e.g. storing and processing steps. The advantage is that appropriate actions can be performed in a timely manner.

According to an embodiment, the optimized retrofit instruction can be displayed to a user or technical expert for further evaluation by means of a display unit. The optimized retrofit instruction can be reviewed by the technical expert or automatically by means of a computing or processing unit during the evaluation. This way, the optimized retrofit instruction undergoes a post-processing step and hence additional check before being released for retrofit. The optimized retrofit instruction can be approved depending on the evaluation result.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method.

### 4. Short description of the drawings

In the following detailed description, presently preferred embodiments of the invention are further described with reference to the following figures:
- Fig. 1: illustrates a flowchart of the computer-implemented method according to the invention.
- Fig. 2: illustrates the technical system according to an embodiment.

### 5. Detailed description of preferred embodiments

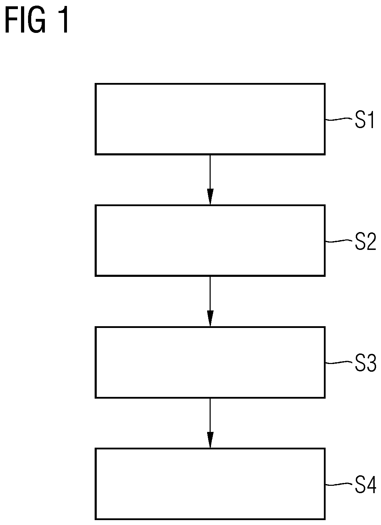

Figure 1 illustrates a flowchart of the computer-implemented method according to the invention.

In the first step, the plurality of sustainability data items is provided S1. In the second step, the at least one remaining lifetime and at least one performance indicator are provided for the at least one sustainability data item of the plurality of sustainability data items S2. The at least one remaining lifetime and/or the at least one performance indicator is determined using physics-based modeling. In the next step, the optimization step, the retrofit instruction is optimized with regard to the minimal ecological footprint based on the plurality of sustainability data items, the at least one remaining lifetime and the at least one performance indicator S3. This results in the optimized retrofit instruction as output, which is then provided in the last step S4.

### Input data, the sustainability data items S1

In an embodiment, the sustainability data items are retrieved from a database e.g., via SQL queries. This database can be maintained in a green digital twin ecosystem. Moreover, the database can be kept up to date for diverse applications, like life cycle environmental impact assessments ("LCA"). This embodiment allows for transparency on sustainability impacts of feasible retrofit instructions that fit the predicted remaining lives of e.g. motor components.

### Input data, the remaining lifetimes S2

In an embodiment, the lifetimes are determined by means of physics-based modeling. Therefore, a physics-based simulation model can be utilized. This model translates the physical load profile into lifetime relevant results (values that are not or cannot be measured) - used in models for remaining lifetimes. Examples include temperature calculations for the aging prediction of winding insolation and bearing oil. The resulting remaining lifetimes limit the scheduling decision by the latest point in time for a necessary retrofit.

### Optimization S3

The input data is then used for optimization, according to an embodiment, to set up a multi-objective optimization problem. Contrary to prior art objectives like minimal downtimes and maximum overall equipment efficiency (OEE), the objective of the optimization problem is a minimal ecological footprint. The result of the optimization is the optimized retrofit instruction.

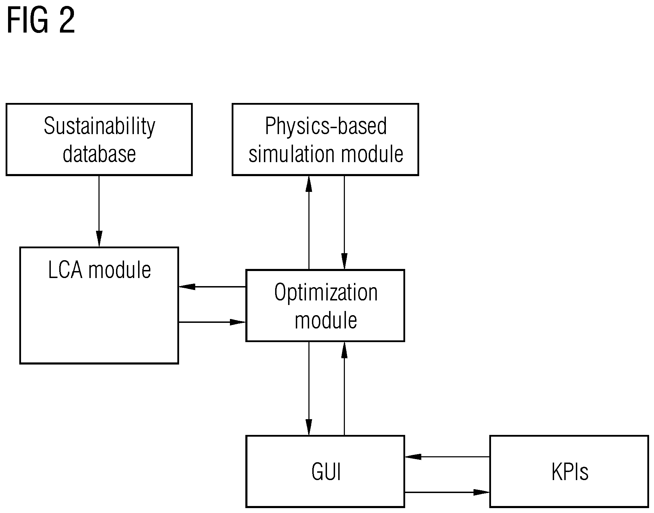

Figure 2 illustrates various components of the technical system according to an embodiment. The technical system can be equally referred to as optimization system.

Sustainability database for material retrieval, transportation, local energy mixes, and production process steps:
The sustainability database contains the quantitative assessments with respect to the sustainability impact categories for material retrieval, transportation means, industrial production process steps. This information is needed by the LCA module.

### LCA module with sustainability evaluation service:

The LCA (life cycle (environmental impact) assessment) module provides a service for evaluating the sustainability aspects. The sustainability aspects also include the product carbon footprint of spare parts. Up to now LCA modeling has not been used for decisions during system operation, but for assessing a system's environmental impact, e.g. from cradle to gate, cradle to end-of-life or cradle to cradle. Contrary to prior art, the assessments according to this embodiment are done during the operation phase.

The LCA module receives as input the relevant information like means of transportation for staff and spare parts, or site coordinates for looking up the energy mix at the site.

The LCA module provides as output e.g. CO2e-values and/or values for other relevant sustainability impact categories.

The service of the LCA module is requested e.g., via a REST API call of the optimization module that provides the input to the LCA module and receives the output of the LCA module.

### Physics based simulation module providing lifetime calculation service:

The physics-based simulation module provides the service to calculate remaining lifetimes of components of the production system. Thereby, the input data comprises e.g. components (asset data, configuration), operating conditions (load profiles) and/or environmental conditions (ambient temperature, humidity, etc.). Thereby, the output data comprises remaining (useful) lifetimes of components at current point in time. The service of the physics-based simulation module is called e.g., via a REST API by the optimization module.

### Optimization module:

The output data of the LCA module and the physics-based simulation module allow the optimization module to schedule retrofit times with minimal environmental impact, in combination with environmentally best operating modes that still comply with ecological and technical constraints. The optimization variables are the retrofit times for consuming as much as possible of remaining components' lifetimes, degrees of freedom in operation modes that may affect the lifetimes' consumption velocity, and transport arrangements for supply of spare parts as well as traveling of service staff. Unconsumed lifetimes can be related to CO2e of the component's production that is wasted. On the other hand, multiple traveling of service staff to the factory site for the separate replacements of each component at different times will also increase the CO2e impact, and on top of that there is the negative environmental impact caused by the process of additional factory shutdown and restart (especially in chemical process industries).

### GUI of retrofit optimizer including an integrated SPI (sustainability performance indicator) Dashboard:

The GUI for the optimization module can comprise a SPI (sustainability performance indicator) dashboard to make retrofit decisions transparent for the operator.

The GUI also allows for configuring the following data:
- Asset data specification and configuration of the system
- Load profile / Operational conditions:
   entering constraints on allowed operating modes might provide some degrees of freedom for the optimization module to select an operating mode to slow down life-time consumptions of specific components.
- Environmental conditions can be e.g., ambient tempera-ture, air humidity, etc. in case these conditions are relevant for system operation.
- KPI constraints: there might be e.g., contractual constraints on the production like delivery times of products or some economic KPIs that shall be included in the optimization in case there is more than one solution to achieve the minimal ecological footprint.

### Optimized retrofit instructions S4:

- Based on the result of the optimization module, the instruction can be displayed to a person in the GUI with regard to how retrofitting can be achieved in the manner that the environmental impact is minimized whilst considering ecological and technical constraints.
- The information can comprise a schedule. The schedule can comprise the process steps for retrofitting with time stamps. Thereby, a process step can describe tasks which are related to components. The components can degrade over time, for example through mechanical wear or corrosion. Exemplary measures are
   ∘ Reuse: The component is expected to function for a longer time period
   ∘ Repair: The worn out component can be repaired in order to function as originally intended. For example, the repair comprises the polishing of rust coming from corrosion.
   ∘ Refurbishment: The worn out or outdated components are updated to current standards. For example, the refurbishment can comprise the changing the housing of end-of-life or end-of-use motors. Further examples are End-of-Life/Use motors return to factory, replacement of old/worn components with new ones, and replacement of chrome steel bearing with stainless steel bearings in case the company does not use chrome steel bearings anymore.
   ∘ Retrofit: Replacement of worn out or outdated components or upgrades to improve technical and environmental KPI during operation (e.g. integration of energy efficient controllers to regulate energy usage)

## Claims

1. Computer-implemented method for optimizing a retrofit instruction for retrofitting a technical system or at least one technical component of the technical system, comprising the steps:
a. Providing a plurality of sustainability data items (S1);
b. Providing at least one remaining lifetime and at least one performance indicator for at least one sustainability data item of the plurality of sustainability data items (S2); wherein
the at least one remaining lifetime and/or the at least one performance indicator is determined using physics-based modeling;
c. Optimizing the retrofit instruction with regard to a minimal ecological footprint based on the plurality of sustainability data items, the at least one remaining lifetime and the at least one performance indicator (S3); and
d. Providing the optimized retrofit instruction as output (S4).

2. Computer-implemented method according to claim 1, wherein the plurality of sustainability data items is stored in a volatile storage unit or a non-volatile storage unit.

3. Computer-implemented method according claim 2, wherein a. Providing the plurality of sustainability data items comprises
receiving the plurality of sustainability data items from the storage unit by means of an input interface; wherein the input interface is preferably an application programming interface, API, even more preferably a Representational State Transfer-API.

4. Computer-implemented method according to any of the preceding claims, wherein the at least one remaining lifetime and/or the at least one performance indicator is determined for each sustainability data item of the plurality of sustainability data items.

5. Computer-implemented method according to any of the preceding claims, further comprising Retrofitting the technical system or the at least one technical component of the technical system using the optimized retrofit instruction.

6. Computer-implemented method according to any of the preceding claims, further comprising
- Outputting the optimized retrofit instruction;
- Storing the optimized retrofit instruction;
- Displaying the optimized retrofit instruction;
- Transmitting the optimized retrofit instruction to a computing unit; and/or
- Evaluating the optimized retrofit instruction.

7. A computer program product directly loadable into an internal memory of a computer, comprising software code portions for performing the steps according to any one of the preceding claims when said computer program product is running on a computer.

8. Technical system for performing the method according to claims 1-6.
